# EUROPÄISCHE PATENTSCHRIFT

(11) **EP 0 566 837 B1**
(45) Veröffentlichungstag und Bekanntmachung des Hinweises auf die Patenterteilung: **03.01.1996**
(21) Anmeldenummer: 93102501.9
(22) Anmeldetag: 18.02.1993
(51) Int. Cl.: B65G 15/02, B65G 15/60

(54) **Kurvengurtförderer**
Turn belt conveyor
Transporteur à bande courbée

(30) Priorität: 21.04.1992 DE 4213035
(43) Veröffentlichungstag der Anmeldung: 27.10.1993
(73) Patentinhaber: AXMANN-FÖRDERTECHNIK GMBH, D-74889 Sinsheim (DE)
(72) Erfinder: Axmann, Norbert, W-6920 Sinsheim-Ho. (DE)
(74) Vertreter: Geitz, Heinrich, Dr.-Ing.

(56) Entgegenhaltungen:
- DE-A- 3 826 953
- DE-B- 1 120 977
- GB-A- 1 601 707
- GB-A- 2 007 178

## Beschreibung

Die Erfindung bezieht sich auf einen Kurvengurtförderer mit einem über Umlenkrollen geführten, motorisch angetriebenen endlosen Fördergurt, der einen längs seines den Außenradius der Kurve bildenden Randes verlaufenden und über die Gurtebene vorstehenden Randwulst besitzt und bei dem die infolge des Kurvenverlaufs auftretenden Längs- und Querkräfte mittels elastisch nachgiebig gelagerter Stützrollen kompensiert werden, die längs des Außenradius in Förderrichtung beabstandet voneinander angeordnet sind und auf der zum Innenradius der Kurve hinweisenden Seite an die Flanke des fest mit dem Fördergurt verbundenen und mit diesem umlaufenden Randwulstes mit gleichbleibender Kraft angedrückt werden.

Aus der DE-C- 1 120 977 ist bereits eine Eckführung für Förderbänder bekannt, bei der zum Führen und Abstützen eines Förderbandes, das über Kegeltrommeln umgelenkt und an der Außenseite mit einem Randwulst in Form eines aufvulkanisierten Keilriemens versehen ist, Stützrollen dienen, die an der zum Kurveninneren hinweisenden Flanke des Keilriemens angreifen und an diese mittels Federkraft angedrückt werden.

Das Förderband steht bei dieser Eckführung kurvenaußenseitig über die Kegeltrommeln vor und ist in dem vorstehenden Randbereich auf seiner Innenseite mit dem aufvulkanisierten Keilriemen ausgerüstet. Demgemäß befinden sich auch die Andrückrollen innerhalb des Umschlingungsbereichs des Förderbandes und werden von innen her schräg nach außen an den Keilriemen angedrückt.

Naturgemäß führt der Angriff der Stützrollen an der zum Kurveninneren hinweisenden Flanke des in dem über die Kegelrollen vorstehenden Randbereich innenseitig aufvulkanisierten Keilriemens dazu, daß der vorstehende Randbereich nach außen auszuweichen bestrebt ist. Um ein derartiges Ausweichen zu verhindern, sind zwar weitere Stützrollen vorgesehen, die außenseitig an dem über die Kegeltrommeln vorstehenden Randbereich des Förderbandes angreifen, aber eine präzise Führung des Förderbandes vermögen diese zusätzlichen Stützrollen nicht zu vermitteln. Insbesondere ist dies der Fall, wenn mittels einer derartigen Eckführung größere Steigungen überwunden werden sollen und dementsprechend die Kurvenbahn geneigt verzogen werden muß, um Güter in waagerechter Lage von einem niedrigeren Niveau auf ein höheres Niveau in waagerechter Lage zu übergeben.

Hier Abhilfe zu schaffen ist das Ziel der Erfindung. Demgemäß soll ein verbesserter Kurvengurtförderer geschaffen werden, bei dem auch bei stark verzogener Kurve und beträchtlichen Niveauunterschieden zwischen den endseitigen Umlenkrollen eine problemlose und weitgehend verschleißfreie Gurtführung im Bereich am Außenradius gewährleistet ist.

Gelöst ist diese Aufgabe dadurch, daß bei dem Kurvengurtförderer nach dem Oberbegriff des Patentanspruchs 1 der Randwulst außenseitig über den Fördergurt vorsteht, daß die Stützrollen frei drehbar an Lenkern gelagert und letztere an sich kurvenaußenseitig erstreckenden Konsolen in jeweils von der oberen und unteren Trumlage des Fördergurtes beabstandeten Anlenkpunkten schwenkbar angelenkt sind und daß die Anlenkpunkte hinsichlich ihres Abstandes von der jeweiligen Fördergurt-Trumlage verstellbar sind.

Angesichts der Anlenkung der die Stützrollen tragenden Lenker in von der oberen und unteren Trumlage des Fördergurtes beabstandeten Anlenkpunkten sowie der elastisch nachgiebigen Andrückung an die Innenflanke des Randwulstes ist eine präzise Kurvenführung des Fördergurtes auch bei über beträchtliche Höhenunterschiede ansteigenden und dementsprechend verzogenen Gurtkurven gewährleistet. Dies gilt auch dann, wenn lastbedingt oder in Abhängigkeit von der Schränkung der Gurtkurve der Randwulst in mehr oder weniger großen Abständen von einer die Außenkurve begrenzenden Seitenwange bzw. den Konsolen mit den die schwenkbare Anlenkung der Lenker vermittelnden Anlenkpunkten verläuft.

Als besonders vorteilhaft hat sich dabei die Verstellbarkeit der Anlenkpunkte der die Stützrollen tragenden Lenker insofern erwiesen, als in einfacher Weise eine Einstellbarkeit der Stützrollen dergestalt möglich ist, daß unter den jeweiligen Einsatzbedingungen die zum Fördergurt hinweisende Kante der Stützrolle beabstandet von der Oberfläche des Fördergurtes an dem Randwulst angreift. Dadurch wird vermieden, daß die zum Fördergurt hinweisenden Kanten der Stützrollen sich in den Fördergurt eingraben und diesen beschädigen können.

Gemäß einer wichtigen Weiterbildung derart kann an jedem eine Stützrolle führenden Lenker eine Druckrolle mit einer etwa parallel zur Oberseite der jeweiligen Fördergurt-Trumlage verlaufenden Achse frei drehbar gelagert und kurvenaußenseitig von der Stützrolle angeordnet sein, die an der Oberseite des mit dem Fördergurt fest verbundenen Randwulstes angreift und den Fördergurt an die zwischen den Fördergurt-Trumlagen angeordneten Gurtführungsrollen andrückt.

Eine derartige Ausgestaltung des erfindungsgemäßen Kurvengurtförderers stellt sicher, daß insbesondere im Bereich der unteren Trumlage deren Abheben von den genannten Gurtführungsrollen unterbunden wird und die schräg gestellten Stützrollen nur an der kurveninnenseitigen Flanke des Randwulstes angreifen, nicht aber an der angrenzenden Oberfläche des Fördergurtes. Dabei hat sich als vorteilhaft erwiesen, wenn die Stützrolle und Druckrolle eines Lenkers einander so zugeordnet sind, daß die zum Fördergurt weisende Kante der Stützrolle um ein Maß kleiner als die Dicke des über die Fördergurtoberseite vorstehenden Randwulstes über die Druckrolle in Richtung auf den Fördergurt vorsteht.

Gemäß einer gleichfalls sinnvollen Weiterbildung sind als Mittel zur elastisch nachgiebigen Andrückung der Stützrollen an die Innenflanke des Randwulstes des Fördergurtes in an sich bekannter Weise Zugfedern vorgesehen, die einerseits an den Lenkern im Abstand von deren Anlenkpunkten an die kurvenaußenseitig kurvenaußenseitig verlaufenden Konsolen und andererseits an den Konsolen selbst oder an einer äußeren Seitenwange angreifen.

Diese Zugfedern können mit Vorteil auch an quer zu den Konsolen bzw. den äußeren Seitenwangen einstellbaren Haltezapfen angreifen und hinsichtlich ihrer Federvorspannkraft durch Einstellung dieser Haltezapfen veränderbar sein, so daß in einfacher Weise eine Anpassung der von den Stützrollen ausgeübten Stützkräfte an einsatzbedingt auftretende Änderungen gelingt und damit eine allen Einsatzbedingungen entsprechende Gurtführung am Außenradius sichergestellt wird.

Gleichfalls gemäß einer Weiterbildung hat es sich im Sinne eines einfachen Vorrichtungsaufbaues als vorteilhaft erwiesen, wenn die ober- und untergurtseitig an dem mit dem Fördergurt fest verbundenen Randwulst angreifenden Mittel zur Kompensation der infolge des Kurvenlaufs des Fördergurtes auftretenden Längs- und Querkräfte untereinander gleich bzw. spiegelbildlich gleich sind.

Anhand der beigefügten Zeichnung soll nachstehend eine Ausführungsmöglichkeit der Erfindung erläutert werden. In schematischen Ansichten zeigen:
- Fig. 1: eine perspektivische Gesamtansicht eines Kurvengurtförderers, dessen Fördergurt von der einen Umlenkrolle zur anderen Umlenkrolle ansteigend verläuft,
- Fig. 2: einen Querschnitt durch den Kurvengurtförderer mit dem Antrieb des Fördergurtes mittels eines motorisch angetriebenen Reibrades und
- Fig. 3: in einer vergrößerten Teilschnittansicht gemäß der Schnittlinie III-III in Fig. 1 die Kompensation der infolge des Kurvenlaufs des Fördergurtes auftretenden Längs- und Querkräfte mittels am Außenradius der Kurve an einem über die Gurtebene vorstehenden Randwulst des Fördergurtes angreifender Stützrollen.

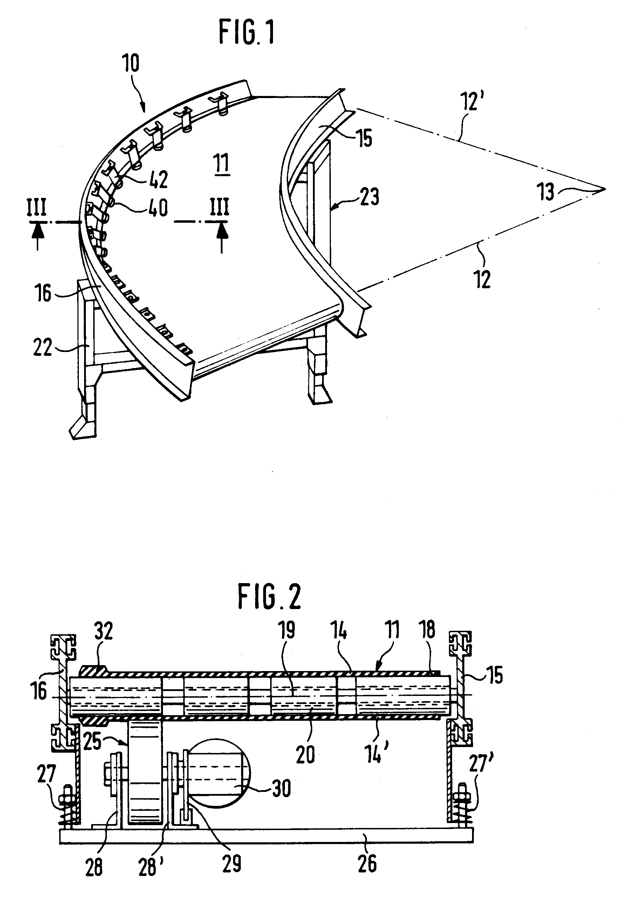

Bei den in Fig. 1 veranschaulichten Kurvengurtförderer 10 erstreckt sich die Förderstrecke über einen Kreisringsektor und wird von einem bandförmigen geschlossenen Fördergurt 11 gebildet. Dieser Fördergurt besteht aus miteinander verklebten kegelstumpfartigen Zuschnitten und ist über jeweils an den Enden des Kreisringsektors angeordnete Umlenkrollen geführt, deren Achsen 12, 12' - in einer Draufsicht gesehen - einander im Zentrum 13 der Kurve schneiden. Dabei kann es sich entweder um vom Innenradius der Kurve zum Außenradius konisch ansteigende Rollen handeln oder die Gurtumlenkung erfolgt jeweils mittels einer Umlenkrolle aus auf einer Rollenachse frei laufend axial benachbart aufgenommenen zylindrischen Rollenabschnitten im Bereich der oberen Trumlage 14 und einer darunter angeordneten konischen Umlenkrolle im Übergangsbereich zur unteren Trumlage 14'.

Bei dem in Fig. 1 gezeigten Kurvengurtförderer 10 steigt der Fördergurt 11 von der einen Umlenkrolle zur anderen Umlenkrolle stark an. Es handelt sich somit um eine stark verzogene Gurtkurve. Der Fördergurt ist zwischen einer Innenwange 15 und einer Außenwange 16 über die genannten Umlenkrollen sowie zwischen den beiden Trumlagen 14, 14' angeordnete Rollen 18 geführt. Diese Führungsrollen bestehen wiederum aus axial benachbart und frei laufend auf einer Rollenachse 19 aufgenommenen zylindrischen Rollenabschnitten 20. Gelagert sind die Führungsrollen in hier nicht weiter interessierender Weise an den Seitenwangen 15, 16 des Kurvengurtförderers. Die Seitenwangen ihrerseits sind auf einem von vertikalen Stützen 22 gebildeten Standgestell 23 aufgenommen.

Wie aus Fig. 2 ersichtlich ist, besitzt der Fördergurt einen sich an dem den äußeren Radius bildenden Rand entlang erstreckenden und über die Gurtebene nach der von den Führungsrollen abgewandten Seite vorstehenden Randwulst 32, an dem auf der zum Kurvenzentrum 13 hinweisenden Seite Stützrollen angreifen, die in Fig. 2 allerdings nicht gezeigt, in Fig. 1 aber schematisch angedeutet sind. Dies wird weiter unten noch im einzelnen beschrieben.

Angetrieben wird der Fördergurt 11 mittels eines an seiner unteren Trumlage 14' angreifenden Reibrades 25. Der gesamte Antrieb ist auf einer Konsole 26 aufgenommen, die sich unter dem Fördergurt 11 über die gesamte Gurtbreite erstreckt und mit den Seitenwangen 15, 16 verbunden sowie gegenüber letzteren über elastische Federn 27, 27' abgestützt ist. Gelagert ist das Reibrad mittels auf der Konsole 26 aufgenommener Lagerböcke 28, 28' und der Antrieb erfolgt über einen an einer Drehmomentstütze 29 gelagerten Antriebsmotor 30, was indessen hier nicht weiter interessiert.

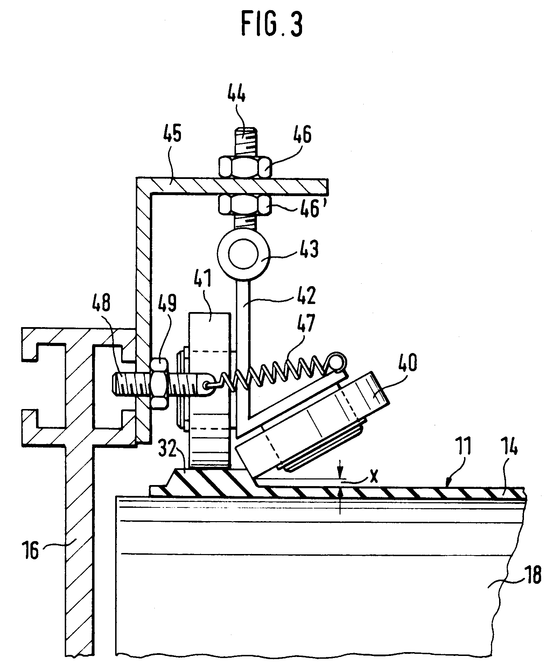

Aus der in Fig. 3 veranschaulichten Teilschnittansicht ist in Übereinstimmung mit Fig. 2 zu erkennen, daß der Fördergurt 11 mit einem sich randseitig am Außenradius entlang erstreckenden und über die Gurtebene nach der von den Führungsrollen 18 abgewandten Seite vorstehenden Randwulst 32 versehen ist. Dieser Randwulst ist untrennbar mit dem Fördergurt 11 verbunden und läuft mit diesem um. Die beim Fördergurtumlauf auftretenden Längs- und Querkräfte werden mittels schräg gestellter Stützrollen 40 aufgenommen, die den mitlaufenden Randwulst 32 auf der zum Kurvenzentrum 13 hinweisenden Seite hintergreifen. Diese Stützrollen sind, wie in Fig. 1 angedeutet, in vorbestimmten Abständen voneinander über den gesamten äußeren Radius verteilt angeordnet und greifen gleichermaßen an den Innenflanken des Randwulstes im Bereich der oberen und unteren Trumlage 14, 14' an.

Gelagert sind die Stützrollen 40 frei drehbar am Ende von Schwenkhebeln 42, die ihrerseits an mit der Außenwange 16 verbundenen Tragkonsolen 45 jeweils in Anlenkpunkten 43 schwenkbar angelenkt sind. Die von den schräg gestellten Stützrollen 40 aufgespannten Ebenen verlaufen jeweils im spitzen Winkel zu der entsprechenden Trumlage des Fördergurtes 11. Die Stützrollen werden mittels Federkraft gegen die zum Kurvenzentrum hinweisende Flanke des Randwulstes 32 angedrückt. Die Federkraft wird durch Zugfedern 47 aufgebracht, die beabstandet von den Anlenkpunkten 43 der die Stützrollen lagernden Lenker 42 an diesen angreifen und andererseits an unten noch näher zu beschreibenden Widerlagern im Bereich der äußeren Seitenwange 16 befestigt sind.

Beim Umlauf des Fördergurtes 11 werden unvermeidbar auftretende Längs- und Querkräfte durch die an der zum Kurvenzentrum hinweisenden Innenkante des Randwulstes 32 angreifenden Stützrollen 40 aufgenommen, wobei angesichts der elastisch nachgiebigen Andrückung der Stützrollen etwaig beim Betrieb auftretende Laufunregelmäßigkeiten durch das Verschwenken der die Stützrollen tragenden Lenker 42 ausgeglichen werden. Es hat sich gezeigt, daß dadurch der Verschleiß des Randwulstes 32 und des Förderbandes 11 infolge des Angriffs der Stützrollen äußerst gering gehalten werden kann.

In Fig. 3 ist nur die Abstützung des Randwulstes 32 im Bereich des Obergurtes 14 gezeigt. Untergurtseitig sind jedoch gleichwirkende und vorzugsweise auch gleich ausgebildete Mittel zur Abstützung der Innenflanke des Randwulstes vorgesehen.

Bei dieser Ausführungsform greifen jeweils paarweise eine Stützrolle 40 und eine Druckrolle 41 am Randwulst 32 des Fördergurts 11 an, und zwar die Druckrollen 41 an der Außenseite des Randwulstes 32. Da in gleicher Weise im Bereich des Untergurtes Druckrollen mit dem Randwulst zusammenwirken, werden die obere und untere Trumlage jeweils in präziser Anlage an den zwischen den Trumlagen 14, 14' angeordneten Führungsrollen 18 gehalten.

Je eine zur Fördergurtebene schräg gestellte Stützrolle 40 und eine rechtwinklig zur Fördergurtebene stehende Druckrolle 41 sind an einem gemeinsamen Lenker 42 jeweils frei drehend gelagert. Der Lenker ist in dem Anlenkpunkt 43 schwenkbar an einem Widerlager 44 angelenkt, das seinerseits an der mit der äußeren Seitenwange 16 verbundenen Konsole 45 höheneinstellbar angeordnet ist. Bei dieser Konsole handelt es sich um ein Winkelprofil, dessen einer Schenkel innenseitig mit der äußeren Seitenwange 16 verbunden ist, während der andere Schenkel jeweils beabstandet von der oberen oder unteren Trumlage des Fördergurtes 11 in Richtung zum Kurvenzentrum 13 vorsteht. An den letztgenannten Schenkeln sind die Widerlager 44 zum Anlenken der die Druck- und Stützrollen tragenden Lenker 42 höheneinstellbar angeordnet, indem jeweils ein Gewindebolzen sich durch eine vertikale Ausnehmung in dem genannten Konsolenschenkel hindurcherstreckt und durch aufgeschraubte Muttern 46, 46' in der jeweiligen Einstellage gehalten wird, die den Schenkel zwischen sich einklemmen.

Während die Druckrolle 41 eines jeden Stützrollen-, Druckrollenpaares durch entsprechende Höheneinstellung des Widerlagers 44 mit dem Anlenkpunkt 43 für den die Rollen 40, 41 tragenden Lenker 42 in Anlage am Randwulst 32 gehalten wird, erfolgt die Andrückung der schräg gestellten Stützrollen 40 an die zum Kurvenzentrum hinweisende Innenflanke des Randwulstes 32, wie bereits erwähnt, kraftschlüssig mittels der Zugfeder 47, deren eines Ende an dem die Stütz- und Druckrolle tragenden Lenker 42 befestigt und deren anderes Ende mit einem Widerlager in Form eines an der Seitenwange befestigten Zapfens 48 fest verbunden ist. Dieser Zapfen ist mit einem Außengewinde in ein entsprechendes Innengewinde der an der Seitenwange 16 angebrachten Konsole 45 eingeschraubt und mittels einer auf seinem Gewinde aufgenommenen Mutter 49 gesichert, die in der jeweiligen Einstellage gegenüber der Seitenwange bzw. der mit dieser verbundenen Konsole 45 verspannt ist.

Bei dieser Ausführungsform gelingt es in besonders präziser Weise, die an der zum Kurvenzentrum hinweisenden Flanke des Randwulstes 32 angreifenden Stützrollen 40 so zu führen, daß die zur jeweiligen Trumlage des Fördergurtes 11 hinweisende Kante der Stützrollen in einem Beschädigungen des Fördergurtes vermeidenden Abstand "x" von der Oberseite des Fördergurtes gehalten wird. Besondere Bedeutung kommt dieser Maßnahme im Bereich der unteren Trumlage zu, weil diese Trumlage infolge ihres Eigengewichtes dazu neigt, sich von den zwischen den beiden Trumlagen angeordneten Führungsrollen 18 abzuheben. Dies wird durch den Angriff der jeweils einer Stützrolle 40 zugeordneten und am selben schwenkbaren Lenker 42 gelagerten Druckrolle 41 unterbunden, deren Rollenmantel an der sich parallel zur jeweiligen Trumlage erstreckenden Oberseite des Randwulstes 32 angreift und dadurch die Trumlage in sicherer Anlage an den Führungsrollen 18 hält.

## Patentansprüche

1. Kurvengurtförderer mit einem über Umlenkrollen geführten, motorisch angetriebenen endlosen Fördergurt (11), der einen längs seines den Außenradius der Kurve bildenden Randes verlaufenden und über die Gurtebene vorstehenden Randwulst (32) besitzt und bei dem die infolge des Kurvenlaufs auftretenden Längs- und Querkräfte mittels elastisch nachgiebig gelagerter Stützrollen (40) kompensiert werden, die längs des Außenradius in Förderrichtung beabstandet voneinander angeordnet sind und auf der zum Innenradius der Kurve hinweisenden Seite an die Flanke des fest mit dem Fördergurt verbundenen und mit diesem umlaufenden Randwulstes mit gleichbleibender Kraft angedrückt werden,
dadurch gekennzeichnet,
daß der Randwulst (32) außenseitig über den Fördergurt (11) vorsteht, daß die Stützrollen (40) frei drehbar an Lenkern (42) gelagert und letztere an sich kurvenaußenseitig erstreckenden Konsolen (45) in jeweils von der oberen und unteren Trumlage des Fördergurtes (11) beabstandeten Anlenkpunkten (43) schwenkbar angelenkt sind und daß die Anlenkpunkte (43) hinsichtlich ihres Abstandes von der jeweiligen Fördergurt-Trumlage verstellbar sind.

2. Kurvengurtförderer nach Anspruch 1, dadurch gekennzeichnet, daß an jedem eine Stützrolle (40) führenden Lenker (42) eine Druckrolle (41) mit einer etwa parallel zur Oberseite der jeweiligen Fördergurt-Trumlage (14, 14') verlaufenden Achse frei drehbar gelagert und kurvenaußenseitig von der Stützrolle angeordnet ist, die an der Oberseite des mit dem Fördergurt (11) fest verbundenen Randwulstes (32) angreift und den Fördergurt an zwischen dessen Trumlagen angeordnete Gurtführungsrollen (18) andrückt.

3. Kurvengurtförderer nach Anspruch 2, dadurch gekennzeichnet, daß die Stützrolle (40) und Druckrolle (41) eines Lenkers (42) einander so zugeordnet sind, daß die zum Fördergurt (11) weisende Kante der Stützrolle um ein Maß kleiner als die Dicke des über die Fördergurtoberseite vorstehenden Randwulstes (32) über die Druckrolle in Richtung auf den Fördergurt vorsteht.

4. Kurvengurtförderer nach einem der Ansprüche 1 bis 3, dadurch gekennzeichnet, daß als Mittel zur elastisch nachgiebigen Andrückung der Stützrollen (40) an die Innenflanke des Randwulstes (32) des Fördergurtes (11) Zugfedern (47) dienen, die einerseits an den Lenkern (42) im Abstand von deren Anlenkpunkten (43) an die kurvenaußenseitig verlaufenden Konsolen (45) und andererseits an den Konsolen bzw. einer Außenwange angreifen.

5. Kurvengurtförderer nach Anspruch 4, dadurch gekennzeichnet, daß die Zugfedern (47) an quer zu den Konsolen (45) bzw. zur Außenwange (16) einstellbaren Haltezapfen (48) angreifen und hinsichtlich ihrer Federvorspannkraft durch Einstellung dieser Haltezapfen veränderbar sind.

6. Kurvengurtförderer nach einem der Ansprüche 1 bis 5, dadurch gekennzeichnet, daß die ober- und untergurtseitig an dem mit dem Fördergurt (11) fest verbundenen Randwulst (32) angreifenden Mittel zur Kompensation der infolge des Kurvenlaufs auftretenden Längs- und Querkräfte untereinander gleich bzw. spiegelbildlich gleich sind.

## Claims

1. Curved belt conveyor with a motor-driven endless conveyor belt (11), which is guided over deflecting rollers, possesses an edge bead (32) projecting above the plane of the belt and extending along its edge forming the outer radius of the curve, and in which the longitudinal and transverse forces arising due to the curved course are compensated for by support rollers (40) which are mounted to be elastically yielding, are arranged along the outer radius in conveying direction and spaced apart from one another and are pressed, at the side facing the inner radius of the curve, with constant force against the flank of the edge bead fixedly connected to and circulating with the conveyor belt, characterised thereby that the edge bead (32) projects at the outer side above the conveyor belt (11), that the support rollers (40) are mounted to be freely rotatable at guide arms (42) and the latter are pivotably articulated at brackets (45), which extend at the curve outer side, at pivot points (43) respectively spaced from the upper and the lower belt run of the conveyor belt (11), and that the pivot points (43) are adjustable with respect to their spacing from the respective belt run of the conveyor belt.

2. Curved belt conveyor according to claim 1, characterised thereby that a pressure roller (41) with an axis extending approximately parallel to the upper side of the respective belt run (14, 14') of the conveyor belt is mounted to be freely rotatable at each guide arm (42) guiding a support roller (40) and is arranged at the curve outer side of the support roller, which pressure roller engages at the upper side of the edge bead (32) fixedly connected with the conveyor belt (11) and presses the conveyor belt down onto belt guide rollers (18) arranged between the belt runs of the conveyor belt.

3. Curved belt conveyor according to claim 2, characterised thereby that the support roller (40) and pressure roller (41) of a guide arm (42) are so arranged relative to one another that that edge of the support roller which faces the conveyor belt (11) projects beyond the pressure roller in direction towards the conveyor belt by an amount smaller than the thickness of the edge bead (32) projecting above the conveyor belt upper side.

4. Curved belt conveyor according to one of claims 1 to 3, characterised thereby that tension springs (47), which engage on the one hand at the guide arms (42) at a spacing from the pivot points (43) thereof at the brackets (45) extending at the curve outer side and on the other hand at the brackets or an outer side wall, serve as means for the elastically yielding pressing of the support rollers (40) against the inner flank of the edge bead (32).

5. Curved belt conveyor according to claim 4, characterised thereby, that the tension springs (47) engage at retaining pins (48) adjustable transversely to the brackets (45) or to the outer side wall (16) and are variable with respect to their spring bias through adjustment of these retaining pins.

6. Curved belt conveyor according to one of claims 1 to 5, characterised thereby that the means, which at the upper and lower belt side engage the edge bead (32) fixedly connected with the conveyor belt (11), for compensation for the longitudinal and transverse forces arising due to the curved course are identical, or identical in mirror image, to one another.

## Revendications

1. Convoyeur courbe à tapis conduit par des rouleaux tournants comprenant un tapis sans fin (11) entraîné par un moteur, avec un bourrelet (32) sur sa longueur du côté du rayon extérieur de la courbe et, au-dessus de la surface du tapis, des rouleaux latéraux d'appui qui, par suite, constituent des moyens élastiques de compensation, disposés éloignés l'un de l'autre le long du rayon extérieur dans la direction d'avance du tapis et, liés sur un flanc avec le tapis convoyeur du côté intérieur de la courbe et avec ce bourrelet circulant pouvant être pressé par une force uniforme, caractérisé en ce que le bourrelet (32) fait saillie extérieurement sur le tapis convoyeur (11), les rouleaux d'appui (40) sont montés fous sur des leviers (42) ces derniers s'étendant du côté extérieur de la courbe à partir de la console (45) respectivement sur les brins inférieur et supérieur du tapis convoyeur (11), des points d'articulation (43) étant prévus, sur lesquels les rouleaux sont articulés et en ce que les distances des points d'articulation (43) par rapport aux brins du tapis sont réglables.

2. Convoyeur courbe à tapis selon la revendication 1, caractérisé en ce que sur chaque levier d'articulation (42) est monté un rouleau d'appui (40) et un rouleau de pression (41) dont la surface externe est sensiblement parallèle aux brins (14, 14') du tapis, monté fou sur son axe et du côté extérieur à la courbe par rapport au rouleau d'appui, qui est en contact ferme avec le rebord (32) du rouleau d'appui et appuie sur les rouleaux d'entraînement (18) du tapis convoyeur entre ces brins.

3. Convoyeur courbe à tapis selon la revendication 2, caractérisé en ce que les rouleaux d'appui (40) et de pression (41) sont disposés par paire sur un levier (42), en ce que le bord du rouleau d'appui a une mesure inférieure à l'épaisseur du bourrelet (32) à la partie supérieure du tapis convoyeur sur le rouleau de pression en direction d'avance du tapis convoyeur.

4. Convoyeur courbe à tapis selon l'une des revendications 1 à 3, caractérisé en ce que le moyen pour effectuer une pression élastique par les rouleaux d'appui (40) sur le flanc intérieur du bourrelet (32) du tapis convoyeur (11) consiste en un ressort en traction (47) qui est fixé, d'une part, sur le levier (42) à distance du point d'articulation (43) sur le côté de la console (45) orienté du côté extérieur de la courbe et, d'autre part, sur la console ou à une zone extérieure.

5. Convoyeur courbe à tapis selon la revendication 4, caractérisé en ce que le ressort en traction (47) est fixé transversalement à la console (45), respectivement à la zone extérieure par un crochet de maintien réglable (48), la force de traction de ressort pouvant être réglée par changement du réglage dudit crochet de maintien.

6. Convoyeur courbe à tapis selon l'une des revendications 1 à 5, caractérisé en ce que les côtés inférieur et supérieur du tapis (11) sur lesquels sont fermement disposés les bourrelets (32) pour la compensation des différences de courses en des forces longitudinale et transversale sont égaux et respectivement égaux à symétrie de miroir.
